Europäisches Patentamt

**European Patent Office**

**Office européen des brevets**

(11) Numéro de publication: **0 146 428**
A1

## (12) DEMANDE DE BREVET EUROPEEN

(21) Numéro de dépôt: 84402197.2

(22) Date de dépôt: 31.10.84

(51) Int. Cl.⁴: **G 05 D 1/03**, G 01 S 1/70, G 01 S 3/78, G 05 D 1/02

(30) Priorité: 04.11.83 FR 8317595

(43) Date de publication de la demande: 26.06.85 Bulletin 85/26

(84) Etats contractants désignés: **AT BE CH DE GB IT LI LU NL SE**

(71) Demandeur: **OFFICE NATIONAL D'ETUDES ET DE RECHERCHES AEROSPATIALES, 29, avenue de la Division Leclerc, F-92320 Chatillon (FR)**
Demandeur: **COMPAGNIE FRANCAISE DES CONVOYEURS S.A. (CFC), 1, rue du Chariot d'Or, F-77400 Lagny (FR)**

(72) Inventeur: **Gailiet, Alain, 8, avenue d'Italie, F-31400 Toulouse (FR)**
Inventeur: **Belleau, Patrick, Place du Serié Clermont le fort, F-31810 Venerque (FR)**

(74) Mandataire: **Plaçais, Jean-Yves et al, Cabinet Netter 40, rue Vignon, F-75009 Paris (FR)**

(54) **Procédé et dispositif de guidage automatique de mobiles, en particulier de chariots automoteurs sans conducteur.**

(57) Un chariot auto-moteur est équipé d'une caméra double (CA), dont les deux voies sont munies de polariseurs respectifs perpendiculaires. Un phare éclaire le champ de visée de la caméra (CA). Des balises rétro-réflectrices en lumière polarisée y sont implantées. Un prétraitement (PT) des deux images fournies par la caméra double permet d'y retrouver les balises par différence. Durant une phase d'apprentissage, une suite d'informations de positions des balises dans l'image est enregistrée comme référence dans une mémoire (MP). Par la suite, le processeur (PR) compare l'image en cours à l'une des images enregistrées, ce qui permet un pilotage automatique du chariot sur une trajectoire qu'on lui a apprise, et qui est définie par le contenu de la mémoire (MP).

1

## Procédé et dispositif de guidage automatique de mobiles, en particulier de chariots automoteurs sans conducteur.

Le guidage d'un mobile tel qu'un chariot automatique de manutention se fait la plupart du temps à l'aide de techniques inspirées du "rail", sans qu'il y ait toutefois contact physique entre le mobile et l'organe de guidage. On utilise ainsi un fil conducteur enterré, sur lequel le chariot peut se guider par détection inductive. Une autre façon de faire consiste à déposer sur le sol une bande de peinture réfléchissante ou fluorescente, que le chariot détecte optiquement pour la suivre. Les installations à fil conducteur enterré sont peu souples, puisque toute modification du chemin des chariots amène à des travaux importants. De son côté, la bande de peinture est très sensible aux salissures et autres dégradations rencontrées dans une ambiance industrielle. Ces deux systèmes sont donc loin de donner entière satisfaction.

Dans sa Demande de Brevet N° 80 26103, publiée sous le N° 2 495 797, l'ONERA a proposé un système de guidage par triangulation optique, dans lequel l'emplacement à atteindre est balisé au moyen d'une "base optique" horizontale constituée par trois rétro-réflecteurs placés respectivement aux deux extrémités et au milieu de la base. Le chariot est équipé d'un phare émettant un pinceau lumineux balayant horizontalement, ainsi que de moyens pour déterminer les intervalles de temps séparant l'apparition des faisceaux renvoyés par la base, c'est-à-dire les distances angulaires des différents points de la base vus du chariot.

Par ailleurs, on sait également guider un mobile par traitement des images de l'environnement prises de ce mobile. Des caméras embarquées fournissent des images de l'environnement à un dispositif de traitement, lequel permet le repérage du mobile par comparaison de ces images à des cartes de référence préétablies. Des comparaisons des images, découlent des actions sur les organes de direction du mobile pour obtenir la superposition des images et atteindre le but visé.

Il faut alors disposer d'une mémoire de stockage des informations de capacité importante, notamment pour mémoriser les cartes de référence. Un calcul assez long est nécessaire pour la comparaison des images reçues aux images mémorisées. La durée de ce calcul tend à ralentir notablement la vitesse maximale de déplacement du mobile.

Ces deux types de systèmes antérieurs sont en outre sensibles aux variations de l'éclairage ambiant qui peuvent se manifester à tout moment.

La présente invention vient apporter des moyens de guidage perfectionnés, qui se contentent d'une part d'un traitement d'images très simple, et d'autre part de calculs brefs pour la détermination des commandes du mouvement du mobile.

A cet effet, l'invention propose tout d'abord un procédé de guidage d'un mobile autonome, muni pour son repérage de moyens de prise de vue, orientés en direction connue par rapport à des axes de référence liés au mobile.

Selon l'invention, ce procédé comporte des étapes consistant à :

a) prévoir dans la zone d'évolution du mobile une série de balises lumineuses émettant en lumière polarisée linéairement ;

b) à bord du mobile, effectuer chaque prise de vue séparément à travers deux filtres de polarisation linéaire différents, comparer à chaque fois les deux images qui en résultent, et déterminer à chaque fois un jeu de signaux relatifs aux positions des balises dans l'image, à partir de leur différence de luminosité entre les deux images ;

c) dans une phase d'apprentissage, déplacer le mobile selon une trajectoire de référence, en enregistrant la suite des jeux de signaux de positions de balises obtenue lors de ce déplacement ; et

d) laisser ensuite le mobile évoluer en pilotage automatique, par comparaison du jeu de signaux de positions de balises qu'il obtient à tout instant à ladite suite enregistrée dans la phase d'apprentissage, et déplacement dans un sens tendant à réduire l'écart entre le jeu instantané et le jeu de référence de signaux de positions de balises.

Les balises peuvent être des sources de lumière munies de polariseurs.

Dans une mise en oeuvre préférentielle, les balises sont des rétro-réflecteurs munis de polariseurs, et le mobile est équipé d'une source lumineuse, telle qu'un phare, orienté comme les moyens de prise de vue.

De préférence, les balises émettent une lumière polarisée dont le plan de polarisation est parallèle ou perpendiculaire à une direction prédéterminée, telle que la verticale, et les deux filtrages de polarisation sont l'un parallèle et l'autre perpendiculaire à cette direction prédéterminée.

4

Pour certaines applications, la prise de vue peut s'effectuer à travers un filtrage chromatique accordé à la lumière émise par les balises, ou rétro-réfléchie par celles-ci.

L'enregistrement prévu à l'étape c) et la comparaison prévue à l'étape d) peuvent être effectués soit à bord du mobile, soit dans un poste centralisé, auquel les informations disponibles à bord du mobile sont transmises par voie radio-électrique ou autre.

Dans un mode de mise en oeuvre particulier, l'étape d) comporte le calcul de l'écart entre la trajectoire réelle du mobile et la trajectoire de référence, et la commande des organes de déplacement du mobile dans le sens tendant à réduire cet écart. D'autres types de calculs peuvent cependant être utilisés, comme indiqué plus loin.

Il est souhaitable que les balises soient disposées de façon que le mobile en voit au moins deux, en tout point de sa zone d'évolution.

Plus particulièrement encore, à l'étape c), les prises de vue sont effectuées selon un échelonnement prédéterminé, dans le temps et dans l'espace, le long de la trajectoire de référence, cet échelonnement étant reproduit lors de l'étape d).

La présente invention couvre également les installations pour la mise en oeuvre du procédé exposé ci-dessus.

L'installation se compose principalement d'un dispositif destiné à être embarqué à bord d'un mobile, et comprenant des moyens de prise de vue associés à des moyens de traitement d'images ainsi qu'à des moyens de calcul et de commande du mobile.

Selon une première caractéristique du dispositif, les

5

moyens de prise de vue sont au moins en partie dédoublés en deux voies optiques relatives au même champ image, mais comportent des filtres de polarisation différents, ce qui fournit, pour chaque champ, deux images différentes ; et les moyens de traitement d'images comprennent des moyens pour lire les deux images ainsi formées, des moyens pour en effectuer la soustraction point par point, et des moyens pour élaborer des signaux électriques représentant la position, dans le champ image des points brillants résultant de la soustraction des deux images, ce qui permet la reconnaissance dans l'environnement de balises émettant une lumière polarisée ; les moyens de calcul comprennent des mémoires propres à enregistrer une suite d'informations relatives aux positions des balises lors d'un déplacement désiré prédéterminé du mobile, et sont agencés pour faire des comparaisons entre les informations de positions courantes des balises et ces informations mises en mémoire ; enfin, les moyens de commande du mobile font déplacer ce dernier dans un sens tendant à minimiser une grandeur représentative des écarts relevés lors des comparaisons précitées.

L'installation selon l'invention se compose de ce dispositif, et de balises émettrices de lumière polarisée, soit à partir de sources d'énergie séparées, soit par simple rétro-réflexion et polarisation de la lumière émise par un phare implanté à bord du mobile et orienté selon une direction voisine de l'axe optique des moyens de prise de vue.

Pour ce qui concerne la structure propre du dispositif, dans un premier mode de réalisation, les moyens de prise de vue comprennent un objectif suivi d'une lame semi-transparente envoyant l'image formée par l'objectif sur deux écrans opto-électroniques à travers deux filtres polarisants respectifs, décalés angulairement de 90° l'un par rapport à l'autre.

Dans un second mode de réalisation, les moyens de prise de vue comprennent deux voies optiques séparées, constituées chacune d'un objectif envoyant l'image qu'il forme sur un écran respectif, chaque voie optique comprenant en outre un filtre polarisant, et les deux filtres polarisants étant placés dans des positions angulaires décalées de 90° l'une par rapport à l'autre.

Les moyens de lecture d'images peuvent comprendre deux tubes analyseurs d'images par balayage d'un faisceau d'électrons. Les balayages des deux tubes étant synchronisés, les moyens de traitement élaborent la différence entre les signaux de sortie des deux tubes analyseurs d'images. En variante, les signaux de sortie des deux tubes analyseurs d'images sont directement des signaux numériques, sur lesquels s'effectue ladite soustraction point par point.

Dans une variante préférentielle de l'invention, les moyens de lecture d'images comprennent deux réseaux bidirectionnels d'éléments photosensibles, sur les sorties desquels s'effectue ladite soustraction point par point.

La présente invention concerne encore l'application du procédé et du dispositif exposé plus haut au pilotage de chariots automoteurs sans conducteur.

Dans cette application, il est souhaitable que les balises soient situées à une même distance au-dessus du sol, distance qui doit être connue de l'organe de commande du chariot automoteur.

Bien que différentes configurations puissent être envisagées, il est commode d'installer les moyens de prise de vue et le phare à l'avant du chariot.

D'autres caractéristiques et avantages de l'invention apparaîtront à la lecture de la description détaillée qui va suivre, et à l'examen des dessins annexés, sur lesquels :

La figure 1 illustre un mobile tel qu'un chariot équipé d'un appareil de repérage ou capteur prenant des vues de

0146428

7

son environnement.

La figure 2 illustre schématiquement un premier mode de réalisation de la partie optique de l'appareil de repérage.

La figure 3 illustre schématiquement un second mode de réalisation de la partie optique de l'appareil de repérage.

La figure 4 illustre un premier mode de réalisation de la partie électronique de l'appareil de repérage.

La figure 5 illustre un second mode de réalisation de la partie électronique de l'appareil de repérage.

La figure 6 illustre un troisième mode de réalisation de la partie électronique de l'appareil de repérage.

La figure 7 illustre sous forme de schéma de principe les éléments de l'installation selon l'invention qui sont embarqués à bord du chariot.

La figure 8 illustre les principales étapes de la phase d'apprentissage.

Les figures 8A à 8C illustrent différentes images obtenues au cours de cette phase d'apprentissage.

La figure 9 illustre les principales étapes de la phase de guidage-pilotage du chariot ; et .

Les figures 9A et 9B illustrent des images visualisées sur l'écran en différents instants de la phase de guidage-pilotage.

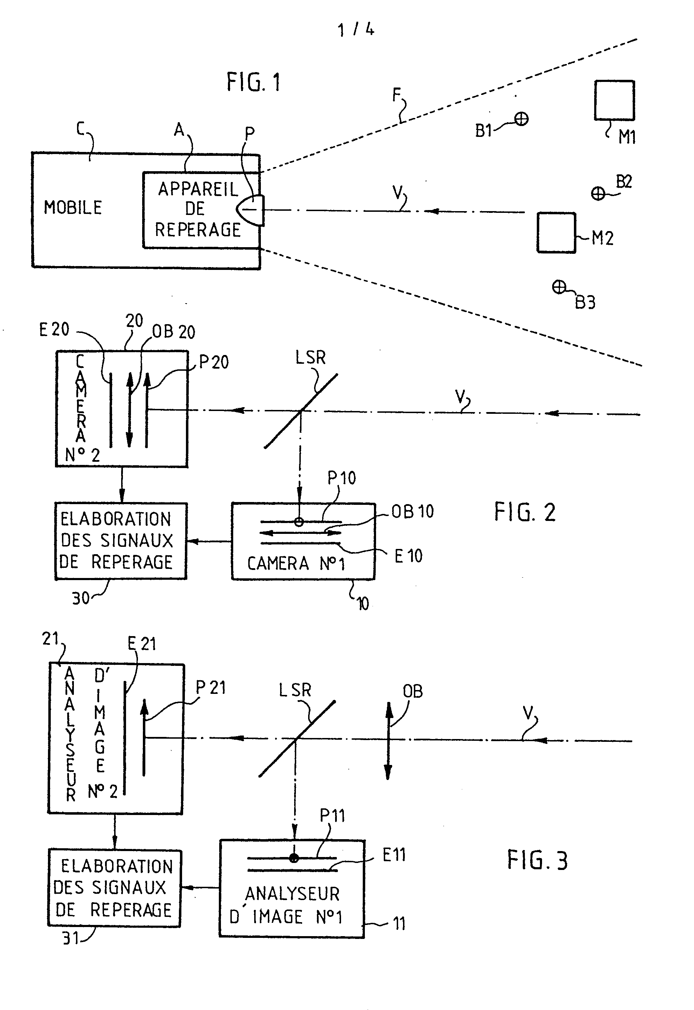

Sur la figure 1, un mobile tel qu'un chariot C porte un appareil de repérage noté A. Celui-ci prend des vues de son

8

environnement selon un champ F, avec un axe de visée V.

L'ensemble est supposé représenté en vue de dessus. L'environnement comprend une série de balises telles Bl à B3, propres à émettre en direction du chariot C une lumière polarisée verticalement. Les balises peuvent être elles-mêmes des sources lumineuses, munies d'alimentations autonomes ou bien alimentées sur le secteur, et pourvues bien entendu de polariseurs. Une variante préférentielle consiste à équiper le mobile C d'un phare P, qui illumine la zone de visée de l'appareil de repérage A. Les balises sont alors simplement constituées de rétro-réflecteurs, tels que des catadioptres, sur lesquels on a disposé un film polariseur, dans un plan défini et fixe. Avec les balises Bl à B3 peuvent se trouver différents corps ou obstacles tels que Ml et M2, que le chariot devra éviter lors de son déplacement.

Le chariot lui-même est autonome, c'est-à-dire d'une part automoteur, et d'autre part susceptible de fonctionner en pilotage automatique, sans personnel de conduite.

L'axe de visée V de l'appareil de repérage est orienté en direction connue par rapport à des axes de référence liés au mobile. Il est admis dans la suite que cette direction est fixe, et orientée vers l'avant du mobile.

Dans le premier mode de réalisation, illustré sur la figure 2, l'ensemble de la scène vue par l'appareil A dans le champ F est dédoublé par une lame semi-réfléchissante LSR. Cette lame réfléchit une partie de la scène vers une première caméra notée 10. Elle transmet une autre partie du rayonnement lumineux associée à la scène vers une seconde caméra notée 20. La caméra 10 comprend, comme illustré schématiquement, un filtre polariseur P10, suivi d'un objectif OB10, puis d'un écran E10. Quoiqu'ils soient illustrés à proximité immédiate les uns des autres sur la figure 2, ces éléments sont bien entendu placés à des distances convenables pour que l'objectif OB10 fournisse sur l'écran E10 une image de la scène.

De son côté, la caméra 20 comprend, de manière similaire, un filtre polariseur P20, suivi d'un objectif OB20, puis d'un écran E20 recevant l'image de la scène définie par l'objectif OB20.

Les filtres polariseurs P10 et P20 sont orientés perpendiculairement l'un à l'autre, et l'un deux, ici le filtre P10, est agencé pour laisser passer le rayonnement polarisé émis par les balises B1 à B3. Inversement, le filtre P20 arrêtera pratiquement tout le rayonnement de ces mêmes balises.

Les caméras 10 et 20 sont équipées de moyens d'analyse d'image, réalisables de différentes manières, comme on le verra plus loin. A propos de la figure 2, on suppose qu'il s'agit de caméras de télévision, c'est-à-dire dans lesquelles les images formées sur les écrans E10 et E20 sont lues par des tubes analyseurs d'images opérant par balayage à l'aide d'un faisceau d'électrons (Vidicons, par exemple).

Les sorties électriques des deux caméras 10 et 20 sont appliquées à un dispositif électronique d'élaboration des signaux de repérage noté 30.

Il est maintenant fait référence à la figure 3. Cette figure diffère de la figure 2 en ce qu'un seul objectif, commun, noté OB, est placé en amont de la lame semi-réfléchissante LSR.

Des analyseurs d'images 11 et 21 sont constitués à partir d'écrans E11 et E21, placés respectivement de manière convenable, compte tenu de la séparation de faisceaux effectuée par la lame semi-réfléchissante LSR, pour qu'ils reçoivent chacun une image de la scène observée selon le champ F.

Des filtres polarisants P11 et P21 sont respectivement placés devant les écrans E11 et E21, selon des directions perpendiculaires. Comme précédemment, le filtre polarisant P11 est supposé laisser passer le rayonnement lumineux polarisé des balises B1 à B3, tandis que le filtre P21 l'arrête.

En ce cas, on admettra que l'analyse des images reçues par les écrans E11 et E21 s'effectue à l'aide de réseaux photosensibles-bidirectionnels, bien que d'autres solutions soient possibles. Les sorties électriques de ces réseaux sont respectivement appliquées à un circuit d'élaboration de signaux de repérage notés 31.

On connaît des caméras vidéo qui fournissent en sortie des signaux analogiques et d'autres, plus sophistiquées, capables de fournir directement des signaux numériques d'images.

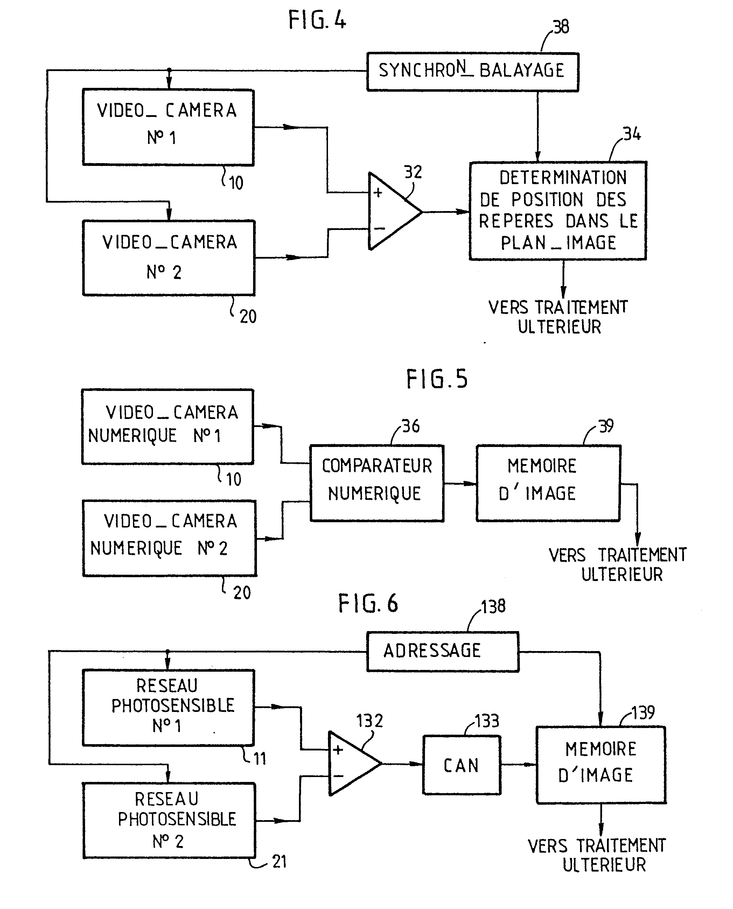

La figure 4 illustre le circuit 30 (ou 31), dans le cas où les caméras vidéo sont du type à sorties analogiques. Deux caméras vidéo 10 et 20 sont excitées par un circuit de synchronisation de balayage 38 commun. Il résulte de cette synchronisation de balayage que les images vont être analysées dans chacune des caméras point par point en synchronisme. Les signaux analogiques simultanément délivrés par les deux caméras 10 et 20 sont alors appliqués à un organe soustracteur tel qu'un amplificateur différentiel 32. La sortie de l'amplificateur différentiel 32 est appliquée à un circuit 34, qui détermine les positions des balises-repères dans le plan image, en fonction d'informations qu'il reçoit également du circuit de synchronisation de balayage 38.

Pour tous les points image, ou pixels, des caméras vidéo qui ne correspondent pas à de la lumière polarisée comme fournie par les balises B1 à B3, les sorties des caméras vidéo sont sensiblement identiques. Il n'apparaît alors que peu ou pas de tension en sortie de l'amplificateur différentiel 32 et le circuit 34 n'enregistre aucune information.

En revanche, lorsque le balayage imposé par le circuit 38 lit un même pixel sur les deux écrans, correspondant à l'image de l'une des balises Bl à B3, les deux caméras 10 et 20 vont fournir des signaux de sortie nettement différents. Il en résulte l'apparition d'une tension de sortie importante en aval de l'amplificateur différentiel 32. Cette information est utilisée par le circuit 34, en combinaison avec un comptage de temps à partir de la sortie du circuit de synchronisation de balayage 38, afin de déterminer les positions de ces pixels sujets à une forte brillance différentielle, dans le plan image. A ces positions des images des balises Bl à B3, dans le plan image, on sait faire correspondre d'une manière simple les positions angulaires des balises connaissant la direction de visée V et le champ F de l'appareil de repérage A de la figure 1.

Ces informations de position peuvent être mémorisées dans le circuit 34, et/ou appliquées à des circuits de traitement ultérieur, permettant un repérage complet du mobile à partir des informations angulaires obtenues.

La figure 5 illustre une variante toujours constituée à base de caméras vidéo, mais dans laquelle celles-ci fournissent des signaux numériques. Les signaux numériques ainsi fournis par les caméras 10 et 20 sont déchargés séquentiellement vers un comparateur numérique 36, lequel opère comme l'amplificateur différentiel 32 précédemment, afin de détecter de nettes différences entre les sorties des caméras vidéo pour le même point image. Lorsqu'ils détectent une telle différence, qui correspond à l'image de l'une des balises Bl à B3, le comparateur 36 applique un signal de commande à une mémoire d'images 39, laquelle enregistre les coordonnées numériques de position dans l'image du pixel en question. Comme précédemment, le contenu de la mémoire d'images 39 peut servir à un traitement ultérieur.

Au lieu de caméras vidéo, les moyens d'analyse d'images peuvent comporter des réseaux photosensibles-bidimensionnels, tels que les réseaux dits à transfert de charges (CCD), qui sont généralement équipés pour délivrer sur commande les informations recueillies en chaque point image, soit à l'aide d'un balayage séquentiel, soit sous forme d'un adressage matriciel. Il a été admis que c'est le cas pour la figure 3.

Cette variante est illustrée sur la figure 6. Un circuit d'adressage 138 excite les deux réseaux photosensibles 11 et 21, dont les sorties sont respectivement appliquées à un amplificateur différentiel 132. En fonction de l'adressage 138, les réseaux vont délivrer des informations analogiques relatives à la luminance de chaque point image, informations qui sont comparées dans l'amplificateur différentiel 132. En présence d'une forte surbrillance enregistrée par l'un des réseaux, relativement à l'autre, la sortie de l'amplificateur différentiel 132 sera le siège d'un signal important. Ce signal peut être utilisé soit directement, soit à travers un dispositif de prétraitement par exemple un convertisseur analogique/numérique, noté 133, connecté à une mémoire d'images 139, laquelle reçoit aussi les informations d'adresses issues du circuit 138. La mémoire 139 sert à des traitements ultérieurs, comme dans les cas précédents.

Les essais qui ont été menés ont montré que le procédé et l'appareil décrits plus haut permettent une excellente discrimination des balises telles que B1 à B3, même dans une ambiance lumineuse fortement contrastée. Il est à noter également que les appareils-capteurs utilisés pour ce repérage n'ont aucune partie mobile, et sont donc insensibles notamment aux vibrations mécaniques subies par le mobile

13

ou chariot pendant son mouvement.

Il est à remarquer encore que la soustraction d'image s'effectue dans tous les cas en ligne, lors de la lecture simultanée des deux images sur les deux caméras (ce mot étant maintenant pris au sens large recouvrant également le cas des réseaux photosensibles-bidirectionnels). Seules sont retenues au niveau de la mise en mémoire les marques brillantes, repérées par leurs positions sur l'écran et dans la mémoire-images.

Le repérage du mobile, à l'aide d'une série de balises bien distinctes, est alors beaucoup plus simple que dans les procédés selon la technique antérieure.

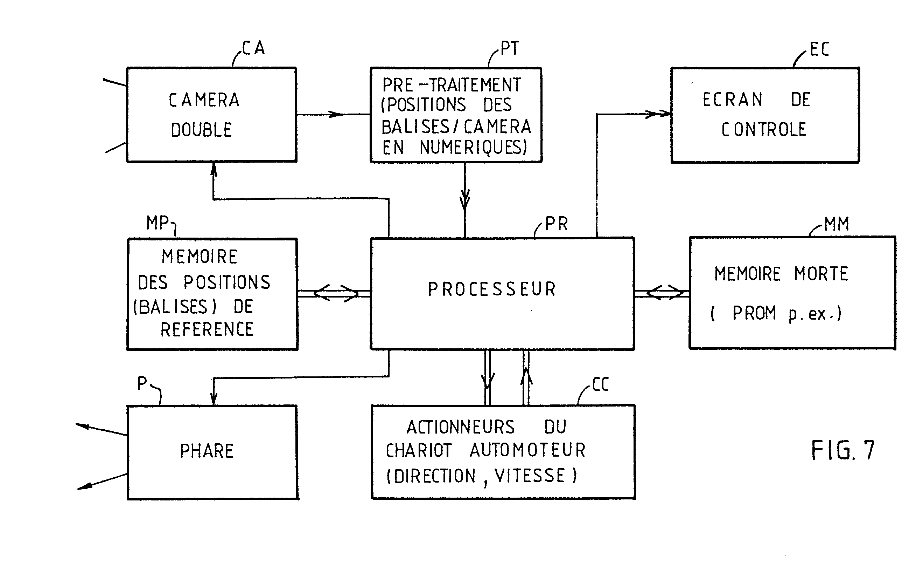

Il est maintenant fait référence à la figure 7, qui illustre l'ensemble de l'équipement de guidage-pilotage d'un mobile tel qu'un chariot automoteur sans conducteur.

Le bloc CA de la figure 7 désigne une caméra double, qui peut être réalisée de la manière décrite en référence à la figure 2 ou à la figure 3. Le signal de sortie de la caméra CA est appliqué à un organe de prétraitement PT, qui correspond au circuit 30 ou 31 des figures 2 et 3, et peut être réalisé comme décrit en référence à l'une des figures 4 à 6.

Une mémoire de travail MP est adjointe à un processeur PR, auquel est associée également une mémoire morte MM, du type programmable ou reprogrammable par exemple. Cette mémoire MM est destinée notamment à recevoir des informations de programme, ainsi que d'autres paramètres stables utiles au fonctionnement du processeur PR.

Le processeur PR peut, par ailleurs, contrôler le phare P déjà cité, ainsi qu'un écran de visualisation de contrôle EC.

Enfin, le processeur PR élabore l'ensemble des commandes du chariot automoteur en direction et, le cas échéant, en vitesse et les applique à un ensemble repéré par le bloc CC sur la figure 7.

Tout d'abord, le processeur PR actionne conjointement la caméra double CA et le phare P. Dans l'hypothèse où ces deux éléments seraient mobiles sur le chariot, ils sont déplacés conjointement, et le processeur PR doit connaître leurs positions relativement au chariot.

Le circuit de prétraitement PT délivre des signaux numériques relatifs aux positions des balises dans l'image au processeur PR.

De la manière précédemment décrite, les balises ont été reconnues en fonction de leurs différences de luminosité entre les deux images élaborées par la caméra double.

Dans la version de base de l'invention, il est admis que toutes les balises possèdent la même direction de polarisation. On peut cependant procéder autrement. En particulier, il est intéressant, pour certaines applications, de prévoir des balises opérant en polarisation verticale, et d'autres en polarisation horizontale. L'appareillage capteur décrit plus haut permet de les reconnaître, par rapport à l'environnement ambiant, tout en faisant la discrimination suivant que la polarisation est verticale ou horizontale. Par exemple, si l'on se réfère à la figure 4, le signe du signal délivré par l'amplificateur différentiel 32 dépendra de la polarisation.

Par ailleurs, comme précédemment indiqué, il peut être avantageux d'effectuer la prise de vue à travers un filtrage chromatique accordé à la lumière émise par les balises, qui peut alors être monochromatique.

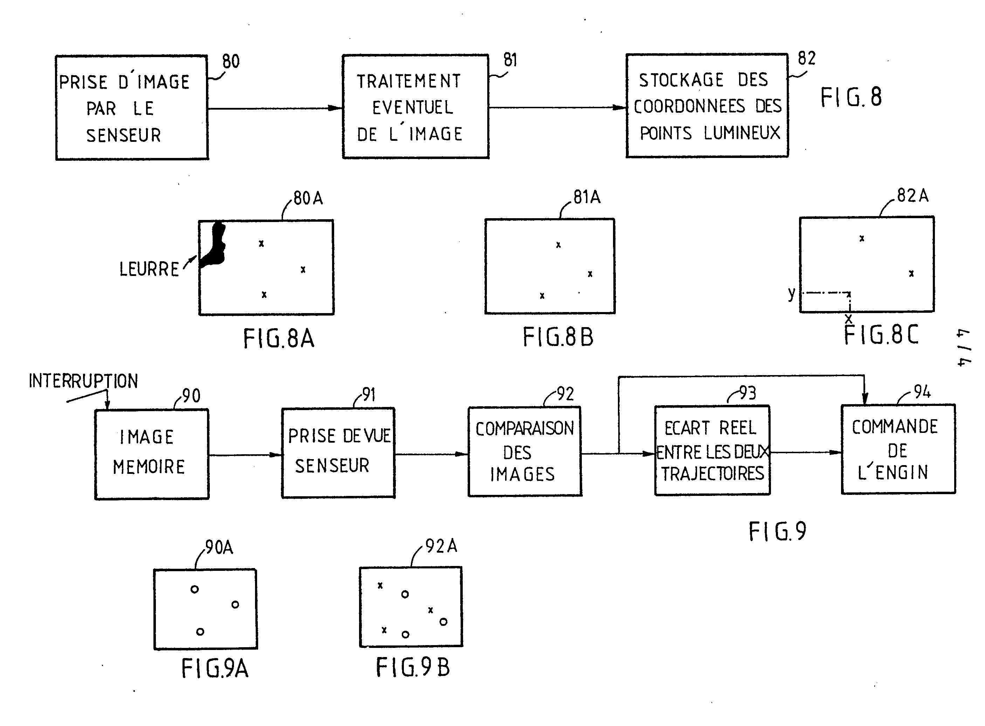

Il est maintenant fait référence à la figure 8 ainsi qu'aux figures 8A à 8C.

La mise en oeuvre de l'invention commence par une phase d'apprentissage, qui est schématisée sur ces figures. Dans cette phase d'apprentissage, le chariot automoteur est conduit manuellement dans l'environnement équipé des balises, selon le trajet qu'on désire lui faire suivre, avec activation de l'ensemble de l'appareillage capteur (caméra double, phare et prétraitement).

Durant cette première phase, les images des balises sont acquises à cadence prédéterminée, non nécessairement uniforme, pour être stockées dans la mémoire MP associée au processeur PR. Une variante consiste à transmettre ces informations à un calculateur externe par voie radio-électrique ou infrarouge notamment.

En plus des prétraitements purement optiques déjà mentionnés, il peut être intéressant d'effectuer entre la prise d'image et le stockage des coordonnées des balises une étape intermédiaire 81 de traitement numérique de l'image. On sait en effet par ce moyen éliminer de nombreux types de leurres qui ne correspondent pas aux balises polarisées, et n'ont donc pas à être mis en mémoire.

En même temps, l'écran de contrôle EC reçoit l'image, une représentation correspondante étant donnée aux figures 8A à 8C.

Ainsi, l'image 80A présente un leurre sous forme de tache étendue, qui ne peut manifestement pas correspondre à l'une des balises. L'image 81A de la figure 8B est débarassée de ce leurre après un prétraitement très simple, consistant à mesurer la dimension de la tache.

L'image 82A illustre simplement la mesure des coordonnées x et y de chacune des balises dans l'image obtenue en soustrayant les deux images correspondant respectivement aux prises de vue à travers des polarisations perpendiculaires.

16

Il apparaît donc que, pour chaque image, et chaque balise de cette image, la mémoire MP recevra une paire de coordonnées numériques de positions x et y. Ceci ne nécessite qu'une capacité de mémoire très limitée, qui n'est fonction que de la densité des marques ou balises placées dans l'environnement à l'endroit où se trouve le chariot.

Bien entendu, il est souhaitable que la disposition des balises dans l'environnement du chariot se fasse en fonction du trajet prévu pour celui-ci.

De même, la cadence des prises de vue lors de la phase d'apprentissage peut être fixe, dans le temps et/ou dans l'espace (l'obtention des deux suppose un déplacement du chariot à vitesse constante en mode manuel d'apprentissage). On peut prévoir une cadence évolutive en fonction de la trajectoire désirée, avec par exemple une prise d'informations différente en ligne droite et en virage.

Au terme de cette phase d'apprentissage, le mobile pourra évoluer en pilotage automatique sur le trajet qu'il aura "appris".

Là encore, le pilotage automatique est beaucoup plus simple que selon la technique antérieure.

On admettra que le chariot est initialement ramené au point de départ du trajet qu'il doit suivre. Il va alors pouvoir comparer à tout instant un jeu de signaux de positions de balises qu'il obtient par son appareil capteur au jeu de signaux correspondant tel qu'il figure dans l'enregistrement contenu dans la mémoire MP. Il suffit alors de déplacer le chariot dans un sens tendant à réduire l'écart entre le jeu instantané de signaux de positions de balises et le jeu de référence correspondant, pour aboutir à ce que le chariot suive la trajectoire désirée. On note que ceci n'implique pas nécessairement une détermination de la position du chariot ni des balises.

En pratique, le processeur PR définira des interruptions, pour chacune desquelles l'étape 90 commence par prélever l'image attendue, contenue dans la mémoire MP (image signifie maintenant les coordonnées des balises dans l'image courante ou attendue). L'étape 91 consiste à prélever les informations d'images courantes telles que fournies par le dispositif de prétraitement PT (après filtrage de leurres éventuels). L'étape 92 consiste alors à comparer ces deux images. Cela suffit pour commander directement l'engin à l'étape 94, comme précédemment indiqué. Il est considéré que la commande d'un chariot automoteur ou autre engin à partir d'informations différentielles est connue de l'homme de l'art.

En certains cas, une étape intermédiaire 93 pourra être mise en oeuvre de façon à déterminer l'écart réel entre la trajectoire effective du chariot et la trajectoire désirée.

L'image 90A, donnée en principe sur l'écran de contrôle EC, représente les positions des balises telles que mises en mémoire MP (fin de l'étape 90). L'image 92A de la figure 9B correspond à la superposition sur l'écran de contrôle EC des positions de balises attendues, telles qu'enregistrées (matérialisées par de petits cercles), et des positions réelles des balises, telles que vues par l'appareil capteur (matérialisées par de petites croix).

Un premier mode de comparaison utilisable à l'étape 92 réside donc en une comparaison directe, "au niveau de l'écran" (tel que représenté dans la mémoire du calculateur), entre l'image attendue et l'image courante, et à commander le dispositif directeur du chariot pour faire coïncider ces deux images. En plus de la direction, on peut aussi agir sur la vitesse. Comme indiqué, il n'est pas nécessaire de déterminer la position du chariot par rapport aux marques dans ce cas.

De manière plus sophistiquée, ce procédé peut être mis en oeuvre en commandant le chariot dans un sens tendant à assurer le maximum d'une fonction de corrélation entre l'image vue et l'image attendue (ce qui a l'avantage d'éliminer intrinsèquement bien des leurres). On peut encore commander le chariot dans le sens tendant à obtenir le minimum d'une fonction prédéterminée des distances entre les points ou positions de balises vues et les positions de balises attendues. Cette fonction peut être avantageusement du type quadratique.

Un autre procédé de comparaison à l'étape 92 passe par l'évaluation de la position du chariot par rapport aux marques. Il est alors nécessaire de voir simultanément au moins deux marques ou balises à un instant donné. Ces marques doivent être situées à une distance du sol qui est connue du processeur PR. Celui-ci peut alors déterminer la position du chariot par rapport aux balises, puis l'écart entre la trajectoire réelle du chariot et la trajectoire de consigne qu'on lui a apprise. La direction du chariot automoteur et sa vitesse, sont alors modifiées pour minimiser l'écart entre les trajectoires, afin de les faire coïncider.

Bien entendu, les algorithmes de commande peuvent être sophistiqués de façon à réaliser par exemple un lissage des trajectoires de raccordement, une meilleure insensibilité au bruit, etc...

Les interruptions qui réalisent l'interrogation conjointe de la mémoire MP et du dispositif de prétraitement PT de l'appareil capteur peuvent être réalisées par exemple à chaque tour de roue du véhicule, ou à des instants donnés et fixés par l'utilisateur, ces interruptions pouvant être internes ou externes. Entre deux interruptions, le processeur PR se charge du pilotage du mobile, ainsi que décrit plus haut.

Dans les modes de réalisation décrits plus haut, les filtrages de polarisation se font dans deux directions perpendiculaires (rapportées à un référentiel lié à l'image). Il peut en être autrement pour certaines applications, pourvu que les deux filtrages de polarisation permettent de distinguer les balises.

Par ailleurs, les précautions habituelles doivent évidemment être prises pour éviter que les faisceaux lumineux polarisés reçus des balises subissent, par transmission et réflexion sur la lame semi-réfléchissante, des rotations importantes de leurs directions de polarisation. Ces changements de la direction de polarisation qui dépendent de l'angle d'incidence des faisceaux lumineux sur la lame, donc de la position angulaire des balises dans le champ d'observation de l'appareil de prise de vue, produisent sur les écrans opto-électroniques des variations de luminance des points représentatifs des balises. Pour éviter ces rotations gênantes un procédé connu de l'homme de métier consiste à choisir une lame semi-réfléchissante à très faible pouvoir rotatoire et un objectif à focale suffisante (par exemple voisine de 13 mm) réduisant les variations d'incidence possibles des faisceaux lumineux des balises sur la lame semi-réfléchissante. Un autre procédé consiste à corriger lorsqu'elles existent, les variations de luminance des points représentatifs des balises sur les écrans opto-électroniques en multipliant, point par point, la valeur des signaux électriques délivrés par les circuits de lecture des écrans, par des coefficients déterminés au cours d'une phase d'étalonnage de l'appareil de repérage.

Enfin, la présente invention n'est pas limitée à des applications terrestres. Dans le domaine spatial, par exemple, on peut envisager le marquage d'une cible à l'aide de balises selon l'invention, pour faciliter considérablement l'orientation et/ou la localisation d'un engin suiveur par rapport à cette cible.

20

Revendications.

1. Procédé de guidage d'un mobile autonome, muni pour son repérage de moyens de prise de vues, orientés en direction connue par rapport à des axes de référence liés au mobile, caractérisé en ce qu'il comporte les étapes consistant à :

a) prévoir dans la zone d'évolution du mobile une série de balises lumineuses (B1-B3) émettant en lumière polarisée linéairement;

b) à bord du mobile, effectuer chaque prise de vues séparément à travers deux filtres de polarisation linéaires différents (P10, P20; P11, P21), comparer à chaque fois les deux images qui en résultent (30, 31), et déterminer à chaque fois un jeu de signaux relatifs aux positions des balises dans l'image, à partir de leur différence de luminosité entre les deux images;

c) dans une phase d'apprentissage (80-82), déplacer le mobile selon une trajectoire de référence, en enregistrant la suite des jeux de signaux de positions de balises obtenue lors de ce déplacement; et

d) laisser ensuite le mobile évoluer en pilotage automatique (90-94), par comparaison du jeu de signaux de positions balises qu'il obtient à tout instant à ladite suite enregistrée dans la phase d'apprentissage, et déplacement dans un sens tendant à réduire l'écart entre le jeu instantané et le jeu de référence de signaux de position des balises.

2. Procédé selon la revendication 1, caractérisé en ce que les balises (B1-B3) sont des rétro-réflecteurs munis de polariseurs, et en ce que le mobile est équipé d'une source lumineuse, telle qu'un phare (P), orientée comme ses moyens de prise de vue.

3. Procédé selon l'une des revendications 1 ou 2, caractérisé en ce que les balises (B1-B3) émettant une lumière polarisée dans une direction parallèle ou perpendiculaire à une direction prédéterminée telle que la verticale, et en ce que les directions de polarisation des deux filtres (P10, P20: P11, P21) sont l'une parallèle et l'autre perpendiculaire à cette direction prédéterminée.

4. Procédé selon l'une des revendications 1 à 3, caractérisé en ce que la prise de vues s'effectue à travers un filtrage chromatique accordé à la lumière émise par les balises.

5. Procédé selon l'une des revendications 1 à 4, caractérisé en ce que l'enregistrement prévu à l'étape c) et la comparaison prévue à l'étape d) sont effectués à bord du mobile.

6. Procédé selon l'une des revendications 1 à 4, dans lequel le mobile comporte des moyens de communication avec un poste centralisé, caractérisé en ce que l'enregistrement prévu à l'étape c) et la comparaison prévue à l'étape d) sont effectués au niveau du poste centralisé, après transmission radio-électrique des informations.

7. Procédé selon l'une des revendications 1 à 6, caractérisé en ce que l'étape d) comporte le calcul de l'écart entre la trajectoire réelle du mobile et la trajectoire de référence, et la commande des organes de déplacement du mobile dans le sens tendant à réduire cet écart.

8. Procédé selon l'une des revendications 1 à 7, caractérisé en ce qu'à l'étape a), les balises sont disposées de façon que le mobile en voit au moins deux en tous points de sa zone d'évolution.

9. Procédé selon l'une des revendications 1 à 8, caractérisé en ce qu'à l'étape c), les prises de vues sont effectuées

0146428

22

selon un échelonnement prédéterminé, dans le temps et dans l'espace, le long de la trajectoire de référence, cet échelonnement étant reproduit lors de l'étape d).

10. Dispositif destiné à être embarqué à bord d'un mobile et comprenant des moyens de prise de vue associés à des moyens de traitement d'image, ainsi qu'à des moyens de calcul et de commande du mobile,

caractérisé en ce que les moyens de prise de vue sont au moins en partie dédoublés en deux voies optiques relatives au même champ-image, mais comportant des filtres de polarisation différents (P10, P20; P11, P21), ce qui fournit, pour chaque champ, deux images différentes,

en ce que les moyens de traitement d'image comprennent des moyens (10, 20; 11, 21) pour lire les deux images ainsi formées, des moyens pour en effectuer la soustraction point par point (32; 16; 132), et des moyens (34; 39; 139) pour élaborer des signaux électriques représentant la position dans le champ-image, de points brillants résultant de la soustraction des deux images, ce qui permet la reconnaissance dans l'environnement de balises émettant une lumière polarisée,

en ce que les moyens de calcul comprennent des mémoires (MP) propres à enregistrer une suite d'informations relatives aux positions des balises lors d'un déplacement désiré prédéterminé du mobile, et sont agencés (PR) pour faire des comparaisons entre les informations de positions courantes des balises et ces informations mises en mémoire, et

en ce que les moyens de commande du mobile (CC) font déplacer ce dernier dans un sens tendant à minimiser une grandeur représentative des écarts relevés lors desdites comparaisons.

11. Dispositif selon la revendication 10, caractérisé en ce que, lesdites balises émettant une lumière polarisée linéairement dans une direction prédéterminée, les filtres de polarisation (P10, P20; P11, P21) sont l'un sensiblement parallèle et l'autre sensiblement perpendiculaire à cette même direction.

12. Dispositif selon l'une des revendications 10 ou 11, caractérisé en ce que les moyens de prise de vue comprennent un objectif (OB) suivi d'une lame semi-transparente (LSR) envoyant l'image formée par l'objectif sur deux écrans (E11, E21), à travers deux filtres polarisants respectifs (P11, P21), décalés angulairement de 90° l'un par rapport à l'autre.

13. Dispositif selon l'une des revendications 10 ou 11, caractérisé en ce que les moyens de prise de vue comprennent deux voies optiques séparées (LSR), constituées chacune d'un objectif (OB10; OB20) envoyant l'image qu'il forme sur un écran respectif (E10; E20), chaque voie optique comprenant en outre un filtre polarisant (P10; P20) et les deux filtres polarisants étant placés dans des positions angulaires décalées de 90° l'une par rapport à l'autre.

14. Dispositif selon l'une des revendications 10 à 13, caractérisé en ce que les moyens de lecture d'image comprennent deux tubes analyseurs d'image par balayage d'un faisceau d'électrons.

15. Dispositif selon la revendication 14, caractérisé en ce que, les balayages des deux tubes étant synchronisés, les moyens de traitement élaborent la différence entre les signaux de sortie des deux tubes analyseurs d'image.

16. Dispositif selon la revendication 14, caractérisé en ce que les signaux de sortie des deux tubes analyseurs d'image sont convertis en signaux numériques, sur lesquels s'effectue ladite soustraction point par point.

17. Dispositif selon l'une des revendications 10 à 13,

24

caractérisé en ce que les moyens de lecture d'image comprennent deux réseaux bidirectionnels d'éléments photosensibles, sur les sorties desquels s'effectue ladite soustraction point par point.

18. Application du procédé et du dispositif selon l'une des revendications précédentes au pilotage de chariots automoteurs sans conducteur.

0146428

1 / 4

FIG. 1

FIG. 2

FIG. 3

2 / 4

0146428

**FIG. 4**

SYNCHRO$^N$_BALAYAGE — 38

VIDEO_CAMERA N° 1 — 10

VIDEO_CAMERA N° 2 — 20

32

DETERMINATION DE POSITION DES REPERES DANS LE PLAN_IMAGE — 34

VERS TRAITEMENT ULTERIEUR

**FIG. 5**

VIDEO_CAMERA NUMERIQUE N°1 — 10

VIDEO_CAMERA NUMERIQUE N° 2 — 20

COMPARATEUR NUMERIQUE — 36

MEMOIRE D'IMAGE — 39

VERS TRAITEMENT ULTERIEUR

**FIG. 6**

ADRESSAGE — 138

RESEAU PHOTOSENSIBLE N° 1 — 11

RESEAU PHOTOSENSIBLE N° 2 — 21

132

CAN — 133

MEMOIRE D'IMAGE — 139

VERS TRAITEMENT ULTERIEUR

FIG. 7

3/4

0146428

```
┌─────────────────┐      ┌─────────────────┐      ┌─────────────────┐
│ PRISE D'IMAGE   │ ⟋80  │ TRAITEMENT      │ ⟋81  │ STOCKAGE DES    │ ⟋82
│ PAR LE          │─────▶│ EVENTUEL        │─────▶│ COORDONNEES DES │       FIG.8
│ SENSEUR         │      │ DE L'IMAGE      │      │ POINTS LUMINEUX │
└─────────────────┘      └─────────────────┘      └─────────────────┘
```

LEURRE

FIG.8A        FIG.8B        FIG.8C

INTERRUPTION

```
┌──────────┐   ┌──────────┐   ┌────────────┐   ┌──────────────┐   ┌──────────┐
│ IMAGE    │⟋90│ PRISE DE │⟋91│ COMPARAISON│⟋92│ ECART REEL   │⟋93│ COMMANDE │⟋94
│ MEMOIRE  │──▶│ VUE      │──▶│ DES        │──▶│ ENTRE LES DEUX│──▶│ DE       │
│          │   │ SENSEUR  │   │ IMAGES     │   │ TRAJECTOIRES │   │ L'ENGIN  │
└──────────┘   └──────────┘   └────────────┘   └──────────────┘   └──────────┘
```

FIG.9

FIG.9A        FIG.9B

4/4

0146428

Office européen
des brevets

0146428
Numéro de la demande

RAPPORT DE RECHERCHE EUROPEENNE

EP    84 40 2197

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 526 181  (TRAITEMENT DE L'INFORMATION TECHNIQUES NOUVELLES)<br>* Figures  3,4;  page  2,  lignes 10-34;  page  6,  ligne 27 - page 11,  ligne  32;  pages  14-16; revendications * | 1-5,7, 16,18 | G 05 D    1/03<br>G 01 S    1/70<br>G 01 S    3/78<br>G 05 D    1/02 |
| Y | US-A-4 333 008  (V.A. MISEK)<br><br>* Figures  1,2; colonne 3, ligne 11 - colonne 6, ligne 15 * | 1-5,7, 16,18 | |
| Y | US-A-3 987 243  (J. SCHWARTZ)<br><br>* Figures  1,18,19;  colonne  7, ligne  11  - colonne 8, ligne 34; colonne 14, lignes 9-66 * | 1-5,7, 16,18 | |
| Y | US-A-3 615 135  (R.A. FRAZER)<br>* Figure 1; colonne 2, ligne 36 - colonne 3, ligne 11 * | 12 | |
| A | FR-A-2 435 728  (LICENTIA PATENT-VERWALTUNGS-GmbH) | | |
| A | FR-A-2 442 457  (SOCEITE OPTEL) | | |

CLASSEMENT DE LA DEMANDE (Int. Cl.4)

G 05 D    1/03
G 01 S    1/70
G 01 S    3/78
G 05 D    1/02

DOMAINES TECHNIQUES RECHERCHES (Int. Cl.4)

G 01 S
G 05 D

Le présent rapport de recherche a été établi pour toutes les revendications

| Lieu de la recherche<br>LA HAYE | Date d'achèvement de la recherche<br>08-02-1985 | Examinateur<br>CANNARD  J.M. |
|---|---|---|